Europäisches Patentamt

European Patent Office

Office européen des brevets

(19)

(11) EP 1 496 439 A1

(12) EUROPEAN PATENT APPLICATION
published in accordance with Art. 158(3) EPC

(43) Date of publication:
12.01.2005 Bulletin 2005/02

(51) Int Cl.⁷: G06F 12/14, G06F 17/60

(21) Application number: 03717553.6

(86) International application number:
PCT/JP2003/004547

(22) Date of filing: 10.04.2003

(87) International publication number:
WO 2003/088057 (23.10.2003 Gazette 2003/43)

(84) Designated Contracting States:
AT BE BG CH CY CZ DE DK EE ES FI FR GB GR
HU IE IT LI LU MC NL PT RO SE SI SK TR

(30) Priority: 15.04.2002 JP 2002111928

(71) Applicant: Sony Corporation
Tokyo 141-0001 (JP)

(72) Inventors:
• KAWAMOTO, Yoji c/o SONY CORPORATION
Shinagawa-ku, Tokyo 141-0001 (JP)

• ISHIGURO, Ryuji c/o SONY CORPORATION
Shinagawa-ku, Tokyo 141-0001 (JP)
• EZURA, Yuichi c/o SONY CORPORATION
Shinagawa-ku, Tokyo 141-0001 (JP)
• NAGANO, Motohiko c/o SONY CORPORATION
Shinagawa-ku, Tokyo 141-0001 (JP)

(74) Representative: Horner, David Richard
D Young & Co
120 Holborn
London EC1N 2DY (GB)

(54) **INFORMATION PROCESSING DEVICE, METHOD, RECORDING MEDIUM, AND PROGRAM**

(57) The present invention relates to an information processing apparatus and method, a recording medium, and a program in which usage status information necessary to use content can be managed on a service-by-service basis. The usage status information is stored in a management area for a service node in association with a content ID (CID) and a usage-right ID for management. Accordingly, since the usage status information is managed on a service-by-service basis, even if a piece of usage status information is broken or tampered with, the effects thereof can be blocked within one management area. In other words, the content whose usage status information is stored in a management area in which usage status information which is tampered with is stored cannot be used; however, the content whose usage status information is stored in other management areas can be used without difficulty. The present invention is applicable to a personal computer.

FIG. 17

EP 1 496 439 A1

## Description

Technical Field

The present invention relates to an information processing apparatus and method, a recording medium, and a program, and particularly to an information processing apparatus and method, a recording medium, and a program in which content can be appropriately managed.

Background Art

In the related art, clients which use content (for example, play back content) based on one or more services provided from one or more license servers collectively manage information indicating, for example, content usage status (for example, the number of playbacks, etc.), which is necessary to use the content (such information is hereinafter referred to as usage status information). For example, an ICV (Integrity Check Value) of the entire usage status information owned by the clients is calculated and stored, thereby managing such information.

However, such collective management of usage status information has a problem in that, for example, when a piece of usage status information is broken or tampered with, the remaining pieces of usage status information cannot be decoded, so that all the services cannot be used.

Disclosure of Invention

The present invention has been made in view of such a problem, and is intended to manage, for example, usage status information which is necessary to use content, for example, on a service-by-service basis so as to block the effects of broken usage status information, etc., within the management area thereof.

An information processing apparatus of the present invention includes managing means for managing usage information of content on a service-by-service basis in association with each service, and executing means for executing a process of using the content based on the usage information.

The managing means can calculate an ICV of the usage information associated with the service for storage on a service-by-service basis. The using means can calculate an ICV of the usage information managed in association with the service associated with the usage information of the content to be used, and can execute the process of using the content when the obtained ICV is identical to the ICV calculated and stored by the managing means.

The usage information can be usage status information indicating usage status of the content or a usage right necessary to use the content.

An information processing method of the present invention includes a managing step of managing usage information of content on a service-by-service basis in association with each service, and an executing step of executing a process of using the content based on the usage information.

A program in a recording medium of the present invention includes a management control step of controlling management of usage information of content on a service-by-service basis in association with each service, and an execution control step of controlling execution of a process of using the content based on the usage information.

A program of the present invention causes a computer to execute a management control step of controlling management of usage information of content on a service-by-service basis in association with each service, and an execution control step of controlling execution of a process of using the content based on the usage information.

In the information processing apparatus and method, and program of the present invention, usage information of content is managed on a service-by-service basis in association with each service, and a process of using the content is executed based on the usage information.

Brief Description of the Drawings

Fig. 1 is a block diagram of a content providing system according to the present invention.
Fig. 2 is a diagram showing the key structure.
Fig. 3 is a diagram of category nodes.
Fig. 4 is a diagram showing a specific example of the correspondence between nodes and devices.
Fig. 5 is a block diagram of a client shown in Fig. 1.
Fig. 6 is a diagram showing the functional structure of the client shown in Fig. 1.
Fig. 7 is a flowchart showing a service registration process of the client shown in Fig. 1.
Fig. 8 is a view showing a management area reserved in a storage unit shown in Fig. 5.
Fig. 9 is a flowchart showing a content downloading process of the client shown in Fig. 1.
Fig. 10 is a flowchart showing a content providing process of a content server shown in Fig. 1.
Fig. 11 is a diagram showing the data structure of content data.
Fig. 12 is a flowchart showing a content using process of the client shown in Fig. 1.
Fig. 13 is a flowchart showing the details of a usage right obtaining process of step S43 shown in Fig. 12.
Fig. 14 is a diagram showing the structure of a usage right.
Fig. 15 is a flowchart showing the details of a usage right updating process of step S45 shown in Fig. 12.
Fig. 16 is a flowchart showing the details of a usage status updating process of step S47 shown in Fig. 12.

Fig. 17 is a view showing usage status information stored in a management area.

Fig. 18 is a flowchart showing a usage right providing process of a license server shown in Fig. 1.

Fig. 19 is a flowchart showing a usage right updating process of the license server shown in Fig. 1.

Best Mode for Carrying Out the Invention

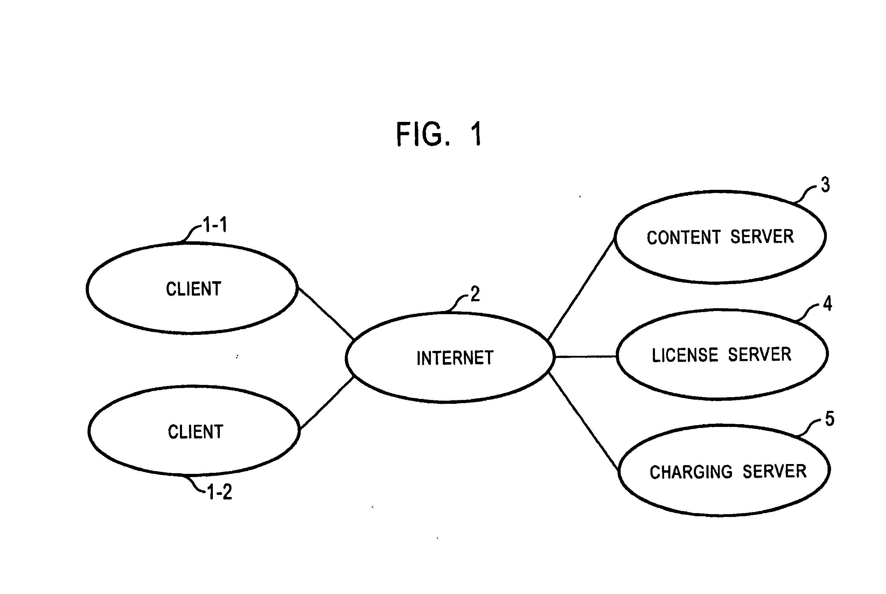

Fig. 1 shows a content providing system according to the present invention. Clients 1-1 and 1-2 (hereinafter referred to simply as a client 1 unless these clients need be distinguished from each other), a content server 3, a license server 4, and a charging server 5 are connected to the Internet 2. An arbitrary number of clients 1, content servers 3, license servers 4, and charging servers 5 may be connected to the Internet 2.

The content server 3 supplies content to the client 1, and the license server 4 sends a usage right necessary to use the content provided by the content server 3 to the client 1. The charging server 5 charges the client 1.

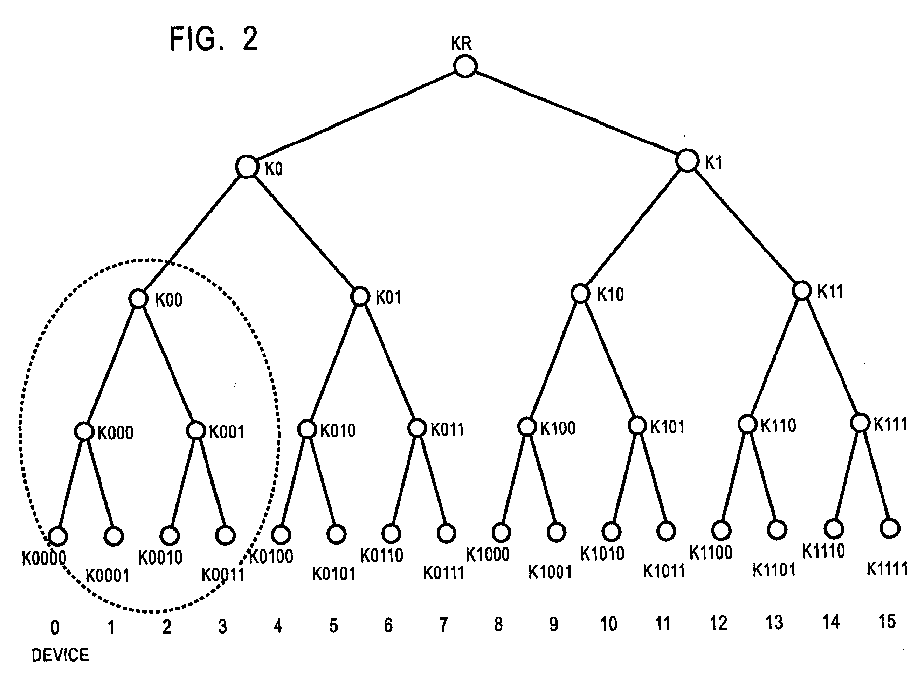

In this content providing system, the keys of the client 1 and a device necessary to use the content are managed by a predetermined key system (hereinafter referred to as a T-system), and the T-system is formed based on the principle of a broadcast encryption scheme shown in Fig. 2.

According to this scheme, keys are established so as to form a hierarchical tree, in which a leaf in the bottom layer represents a key unique to each device. In the example shown in Fig. 2, keys corresponding to 16 devices numbered 0 to 15 are generated.

The keys are assigned to tree nodes indicated by circles in Fig. 2. In this example, a root key KR is assigned to the root node in the top layer, and keys K0 and K1 to the nodes in the second layer, keys K00 through K11 to the nodes in the third layer, and keys K000 through K111 to the nodes in the fourth layer. Keys K0000 through K1111 are assigned to the leaf nodes (device nodes) in the bottom layer.

Due to such a layered structure, for example, the key higher than the keys K0010 and 0011 can be positioned at key K001, the key higher than the keys K000 and K001 at key K00, the key higher than the keys K00 and K01 at K0, and the key higher than the keys K0 and K1 at KR.

A key for using the content is managed based on keys corresponding to the nodes on a single path starting with a device node (leaf) in the bottom layer and ending with the root node in the top layer. For example, a key for using the content on a device corresponding to the leaf numbered 3 is formed of the keys on the path including the keys K0011, K001, K00, K0, and KR.

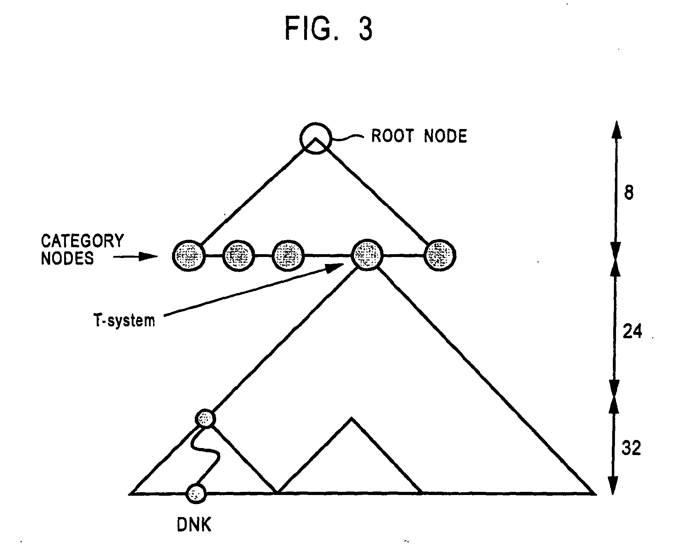

The T-system based on the principle of a broadcast encryption scheme (Fig. 2) is described with reference to Fig. 3 (the hierarchical tree-based key management mechanism employed in the T-system is described in Japanese Unexamined Patent Application Publication No. 2001-352321). In the example shown in Fig. 3, based on the tree formed of the nodes in 8 + 24 + 32 layers, the nodes in the eight layers below and including the root node layer are associated with categories.

As used herein, the term category means a category such as the category of a device using a semiconductor memory, e.g., a memory stick, or the category of a digital broadcast receiving device. The categories and sub-categories can be set based on such device types as well as arbitrary units, such as unique management nodes of a manufacturer, a content provider, a settlement organization, etc., that is, processing units, management units, or provided service units.

The T-system is a system which causes one of the category nodes associated with categories to manage a usage right.

The keys corresponding to nodes in the 24th layer below the layer of the T-system node (these nodes are hereinafter referred to as service nodes, where applicable) are associated with service providers or services provided by the service providers. In this example, therefore, $2^{24}$ (about 16-mega) service providers or services can be assigned.

At the bottom of the 32 layers, $2^{32}$ (about 4-giga) users (or the clients 1) can be assigned. The keys corresponding to the nodes on a path starting with a node in the 32nd layer at the bottom and ending with the T-system node constitute a DNK (Device Node Key), and an ID corresponding to the leaf in the bottom layer is referred to as a leaf ID.

The content key with which the content is encrypted is encrypted using an updated root key KR', and updated node keys in a high layer are encrypted using updated node keys in the layer directly below that layer. These encrypted keys are arranged in a predetermined key block (EKB (Enabling Key Block)), which is sent over a network or via a recording medium having the EKB stored therein. Updated node keys in the layer one layer higher than the bottom of the EKB are encrypted using the node keys or leaf keys at the bottom of the EKB, and are then arranged in the EKB. The client 1 uses any key of the DNK described in the service data to decode the updated node keys in the immediately higher layer described in the EKB distributed together with the content data, and uses the resulting keys to decode the updated node keys in the layer one layer higher than this layer described in the EKB. The above-described operations are performed in turn, and the client 1 can therefore obtain the updated root key KR'.

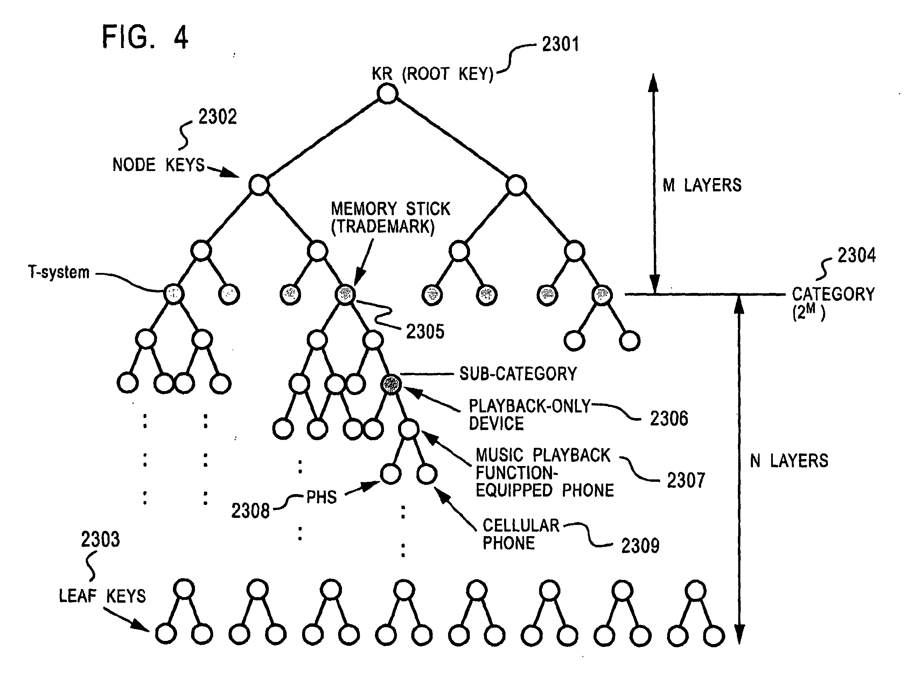

Fig. 4 shows specific examples of the categories in the hierarchical tree structure. In Fig. 4, a root key KR 2301 is set at the top of the hierarchical tree, node keys 2302 are set in the lower intermediate layers, and leaf keys 2303 are set at the bottom. Each device has a device node key (DNK) formed of an individual leaf key, a series of node keys starting with the leaf key and ending with the root key, and the root key.

Predetermined nodes at the top down to the M-th layer (in the example shown in Fig. 3, M = 8) are set as the category nodes 2304. In other words, each of the nodes in the M-th layer is a node to which a particular category of device is assigned. One of the nodes in the M-th layer is assigned as a root, and the nodes in the (M + 1)-th and the following layers and the leaves are the nodes and leaves associated with the devices belonging to this category.

For example, a node 2305 in the M-th layer shown in Fig. 4 is assigned a category [memory stick (trademark)], and the nodes and leaves which follow this node are set as category-specific nodes or leaves including various devices using a memory stick. Thus, the nodes lower than the node 2305 are defined as a set of nodes and leaves associated with the devices defined in the memory stick category.

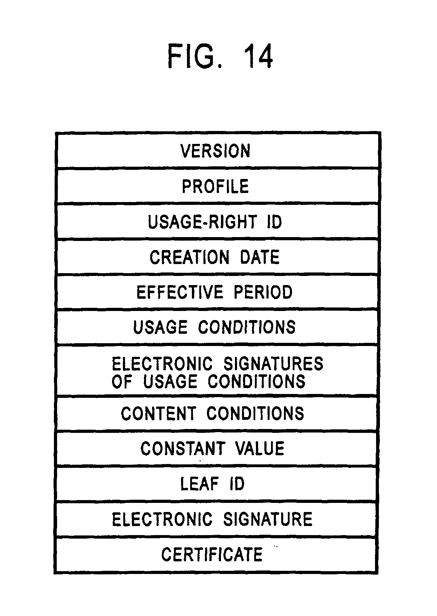

The nodes in the layers several layers below the M-th layer can be set as sub-category nodes 2306. In the example shown in Fig. 14, a node in the layer two layers below the layer of the category [memory stick] node 2305 is assigned a sub-category node belonging to the category of devices using a memory stick, called a [playback-only device] node 2306. A music playback function-equipped phone node 2307 belonging to the category of playback-only devices is configured below the playback-only device node 2306 that is a sub-category node, below which a [PHS] node 2308 and a [cellular phone] node 2309 belonging to the category of music playback function-equipped phones are configured.

As described above, the categories and sub-categories can be set based on device types as well as arbitrary units, such as processing units, management units, or provided service units. As an example, assuming that a category node is assigned the top node specific to a game device XYZ available from a game device manufacturer, the node keys and leaf keys in the layers below the top node layer can be stored in the game device XYZ available from the manufacturer, and the game device XYZ can be sold. Thereafter, an enabling key block (EKB) formed by the node keys and leaf keys under the top node key is generated and distributed, and data which can use distribution of encrypted content or distribution and updating of various keys only on the devices under the top node can be distributed.

When the license server 4 shown in Fig. 1 provides, for example, a service such as playback or checkout of particular content, the license server 4 is assigned a category node (service node) associated with this service. Thus, the license server 4 is assigned a single service node when it provides a single service, and the license server 4 is assigned a plurality of service nodes when it provides a plurality of services.

When the client 1 uses the service provided by the license server 4, the client 1 is assigned a device node (leaf) of the associated node assigned to the service of the license server 4.

Since one node is set as the top node, and the nodes therebelow are set as nodes related with the category or sub-category assigned to the top node, the manufacturer, content provider, etc., which manage a top node in a category layer or a sub-category layer can independently generate an enabling key block (EKB) having that node as a root, and can distribute the generated block to the devices belonging to the top node and the following nodes. Thus, updating of keys can be carried out without any effect on devices which do not belong to the top node but which belong to another category node.

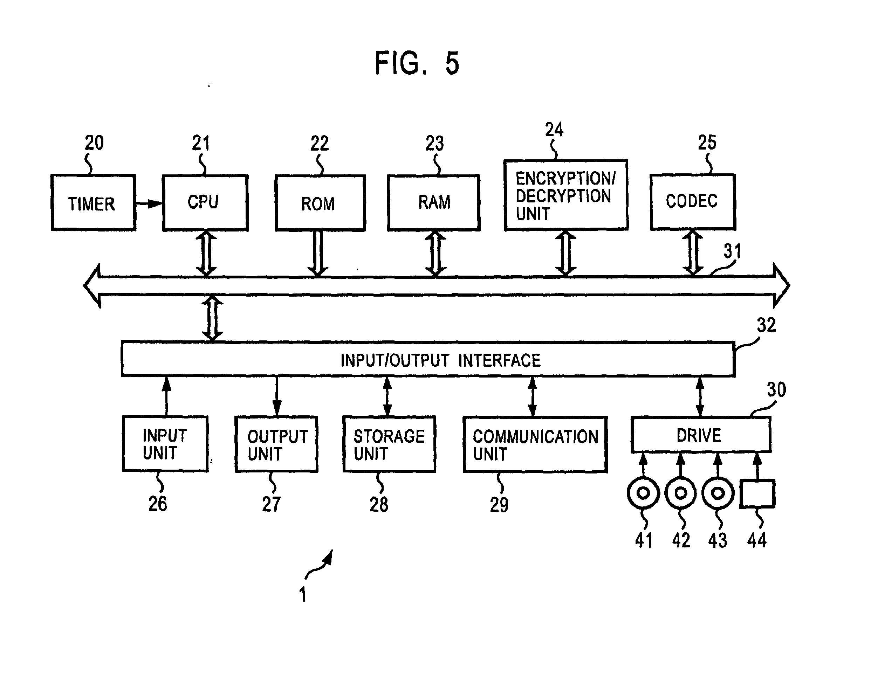

Fig. 5 shows an example of the structure of the client 1.

In Fig. 5, a CPU (Central Processing Unit) 21 executes various processes according to a software program stored in a ROM (Read Only Memory) 22 or a software program loaded to a RAM (Random Access Memory) 23 from a storage unit 28.

A timer 20 measures the time, and supplies time information to the CPU 21. The RAM 23 also stores data, etc., necessary for the CPU 21 to execute various processes, as required.

An encryption/decryption unit 24 encrypts content data and decodes encrypted content data. A codec 25 encodes the content data according to, for example, ATRAC (Adaptive Transform Acoustic Coding) 3 or the like, and supplies the encoded content data to a semiconductor memory 44 connected with a drive 30 via an input/output interface 32 for recording. Otherwise, the codec 25 decodes the encoded data read from the semiconductor memory 44 via the drive 30.

The semiconductor memory 44 may be, for example, a memory stick (trademark) or the like.

The CPU 21, the ROM 22, the RAM 23, the encryption/decryption unit 24, and the codec 25 are connected with each other via a bus 31. The input/output interface 32 is also connected with the bus 31.

An input unit 26 including a keyboard, a mouse, and so on, an output unit 27 including a display formed of a CRT, an LCD, or the like, a speaker, and so on, a storage unit 28 including a hard disk and so on, and a communication unit 29 including a modem, a terminal adapter, and so on are connected with the input/output interface 32. The communication unit 29 performs communication via the Internet 2. The communication unit 29 also performs analog or digital signal communication with another client.

Also connected with the input/output interface 32 is the drive 30, if necessary, to which a magnetic disk 41, an optical disk 42, a magneto-optical disk 43, the semiconductor memory 44, or the like is attached as desired, and, for example, a computer program read therefrom is installed in the storage unit 28, if necessary.

Although not shown, basically, the content server 3, the license server 4, and the charging server 5 are also formed of a computer having a similar structure to that of the client 1 shown in Fig. 2. In the following description, the structure shown in Fig. 2 may also be used as the structure of the content server 3, the license server 4, or the charging server 5.

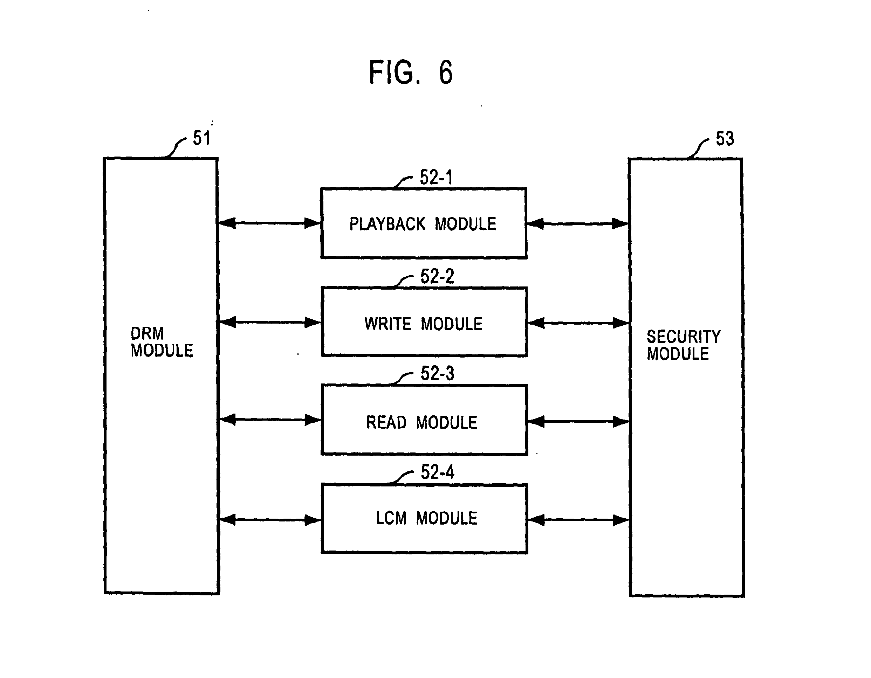

Fig. 6 shows an example of the functional structure of the client 1. A DRM (Digital Right Management) module 51 communicates the content, right data, etc., or manages the right data.

A playback module 52-1 controls playback of the content, and a write module 52-2 controls writing of the content onto a CD-R.

A read module 52-3 controls reading of the content from a CD. An LCM (License Complianced Module) module 52-4 controls processing for checkin, checkout, and movement of the content between the client 1 and another device.

The playback module 52-1 through the LCM module 52-4 are modules for using the content. In the following description, these modules are collectively referred to as a content using module 52 unless they need be distinguished from each other.

A security module 53 performs processing relating to data security, such as encryption of the modules. A request for the security-related processing generated in the modules is sent to the security module 53, and the security module 53 performs encryption or the like in response to the request.

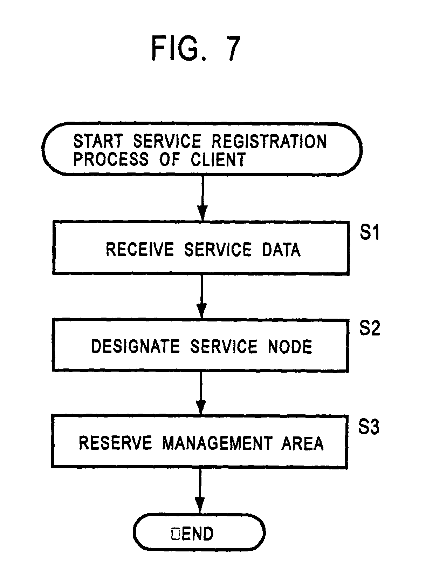

The operation of the client 1 when the client 1 is registered in the license server 4 and obtains predetermined information from the license server 4 is described with reference to the flowchart shown in Fig. 7.

In step S1, the CPU 21 (DRM module 51) of the client 1 receives via the communication unit 29 service data which is sent from the license server 4 when the client 1 is registered in the license server 4 and which includes a leaf ID, a DNK (Device Node Key), a pair of a secret key and a public key of the client 1, a public key of the license server 4, and certificates of the public keys. When the client 1 is registered for a plurality of services provided by the license server 4, the service data of these services is sent, and the client 1 receives it as appropriate.

In the service data, the leaf ID is identification information assigned to each client, and the DNK is a device node key necessary to decode a content key Kc encrypted using an EKB (enabling key block) included in the content.

In step S2, the DRM module 51 designates a service node which manages the usage right based on the leaf ID.

More specifically, a service node ID is detected. As shown in Fig. 2, the leaf ID corresponds to one node on a path formed of the nodes in 64 layers, and the nodes are traced back by, for example, 32 layers from the leaf ID to detect a service node ID.

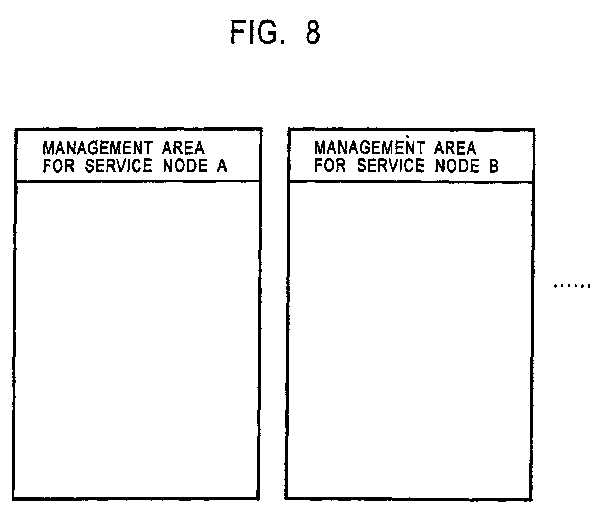

In step S3, the DRM module 51 reserves an area in which the usage status of the content which can be used based on the registered service or the like is managed (this area is hereinafter referred to as a management area) in the storage unit 28 in correspondence with the service node designated in step S2. In the example shown in Fig. 8, for example, management areas for service nodes A and B are reserved in the storage unit 28.

Then, the process ends. This registration process is carried out for each service provided by the license server 4.

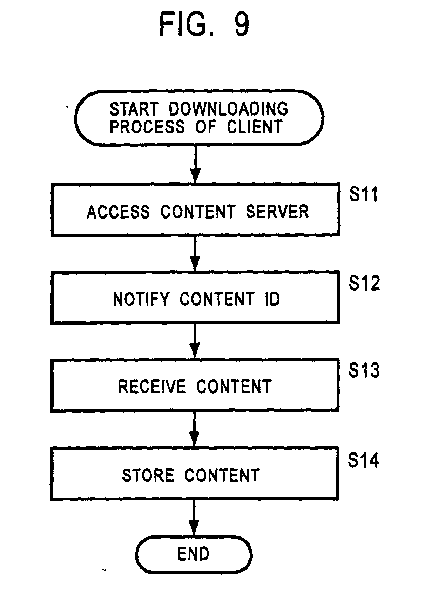

A process for the client 1 to receive content to be used from the content server 3 is described with reference to the flowchart shown in Fig. 9.

When the user operates the input unit 26 of the client 1 to instruct access to the content server 3, in step S11, the DRM module 51 controls the communication unit 29 to access the content server 3 via the Internet 2.

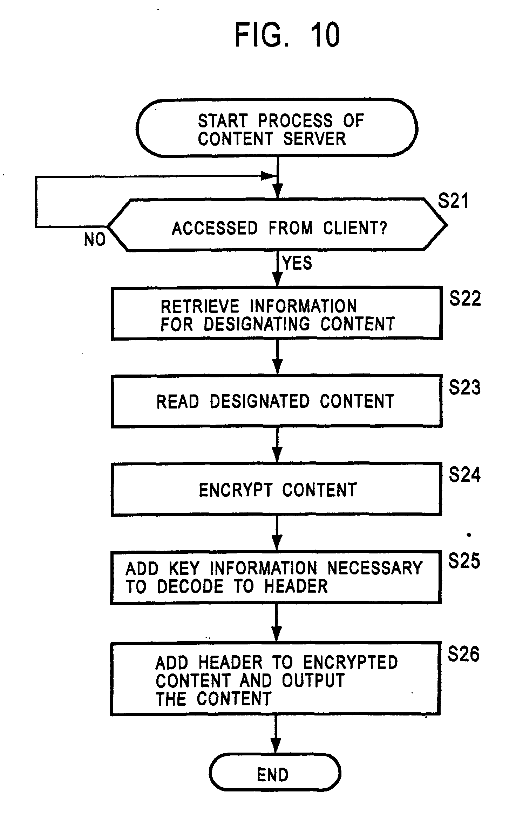

In step S12, when the user operates the input unit 26 to designate the content to be provided, the DRM module 51 receives the designated information, and notifies the content ID of the designated content of the content server 13 via the communication unit 29 over the Internet 2. As described below with reference to the flowchart shown in Fig. 10, the content server 3 which receives this notification sends the content including encrypted content data. The DRM module 51 receives the content data via the communication unit 29 in step S13, and stores the encrypted content data in the storage unit 28 in step S14.

A content providing process of the content server 3 corresponding to the above-described process of the client 1 is described with reference to the flowchart shown in Fig. 10. In the following description, the structure of the client 1 shown in Fig. 5 can also be used as the structure of the content server 3.

In step S21, the CPU 21 of the content server 3 stands by until it is accessed from the client 1 via the communication unit 29 over the Internet 2. If it is determined that the content server 3 is accessed, in step S22, the content ID sent from the client 1 is retrieved. The content ID is information notified by the client 1 in step S12 shown in Fig. 9.

In step S23, the CPU 21 of the content server 3 reads, from the content stored in the storage unit 28, the content data designated in the content ID retrieved in step S22. In step S24, the CPU 21 supplies the content data read from the storage unit 28 to the encryption/decryption unit 24 to encrypt it using the content key Kc.

Since the content data stored in the storage unit 28 has been encoded by the codec 25 according to ATRAC-3, this encoded content data is encrypted here.

The content data which is encrypted in advance may be stored in the storage unit 28, in which case the operation of step S24 can be omitted.

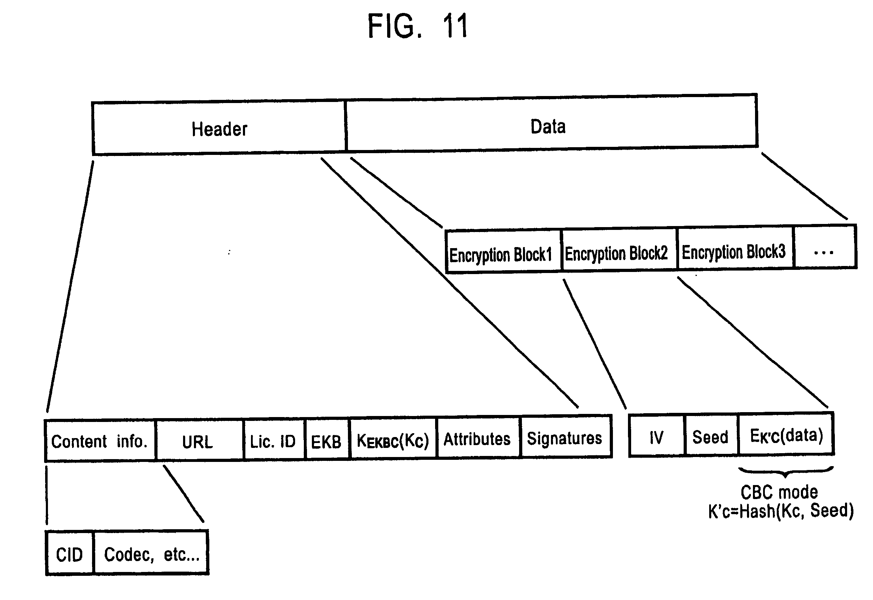

In step S25, the CPU 21 of the content server 3 adds key information necessary to decode the encrypted content (the EKB and $K_{EKBC}$ (Kc) described below with reference to Fig. 11) to a header forming a transmission format of the encrypted content data. In step S26, the CPU 21 of the content server 3 sends data, which is formed by formatting the content encrypted in step S24 and the header having the key information added thereto in step S25, to the accessing client 1 via the communication unit 29 over the Internet 2.

Fig. 11 shows the data structure of the content sent from the content server 3 to the client 1. As shown in Fig. 11, the content data is formed of header and data.

The header contains content information, a URL (Uniform Resource Locator), an enabling key block (EKB), data $K_{EKBC}$ (Kc) serving as a content key Kc encrypted using a key $K_{EKBC}$ generated from the EKB, attributes of the content, and signatures.

The content information contains a content ID (CID) serving as identification information for identifying the content data formatted as data, and information such as the codec method of the content. The content ID (CID) includes, for example, the content title, the number assigned to each item of the stored content, and so on.

The URL is address information which is accessed in order to obtain a usage right necessary to use the content. In the case of the system shown in Fig. 1, the URL is an address of the license server 4 necessary to receive the usage right.

The attributes of the content indicates information on the content, including a content ID, a record company ID as identification information for identifying the content provider, an artist ID as identification information for identifying the artist, and so on. In this embodiment, the attributes are used to specify the content defined by the usage right.

The signatures are electronic signatures corresponding to the attributes of the content.

The data is formed of an arbitrary number of encryption blocks. Each encryption block includes an initial vector (IV), a seed, and data EK'c(data) formed by encrypting the content data using a key K'c.

The key K'c is formed of a value calculated by applying the content key Kc and a random-number value Seed to hash function, as given by the following equation:

$$K'c = Hash(Kc, Seed)$$

The initial vector IV and the seed are set to values which differ from one encryption block to another.

The encryption is performed every eight bytes after dividing the data of the content in units of eight bytes. Given eight bytes are encrypted in a CBC (Cipher Block Chaining) mode using the preceding encrypted eight bytes.

When the first eight-byte content data is encrypted, there is no preceding encrypted eight-byte data. In the CBC mode, therefore, the first eight-byte content data is encrypted using the initial vector IV as the initial value.

With such CBC-mode encryption, if one encryption block is compromised, there is no effect on other encryption blocks.

The encryption method is not limited thereto.

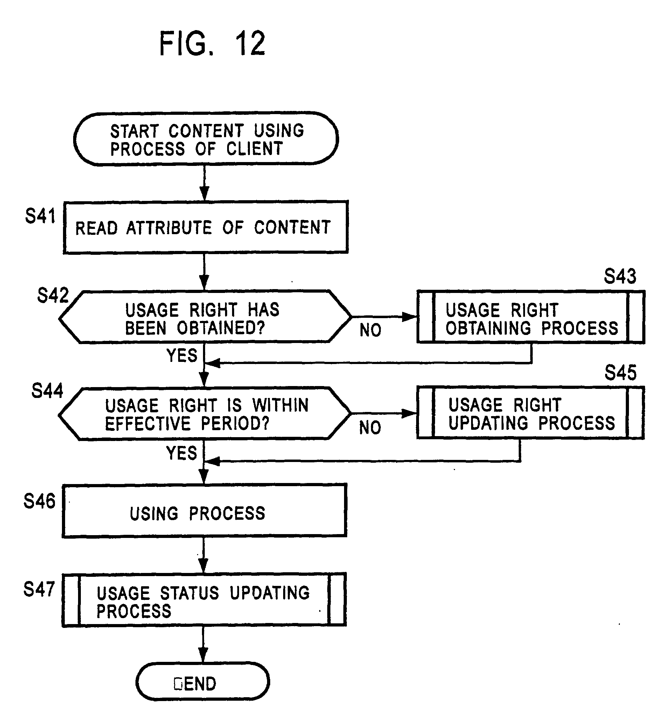

An operation of the client 1 for using the content acquired in the above way is described with reference to the flowchart shown in Fig. 12.

In step S41, the CPU 21 (content using module 52) of the client 1 obtains content identification information (CID) of the content indicated by the user using the input unit 26.

When the content is indicated, the content using module 52 reads the attributes. The attributes are described in the header of the content, as shown in Fig. 11.

In step S42, the content using module 52 determines whether or not a usage right in which the attributes read in step S41 satisfy the content conditions contained in each usage right has been obtained by the client 1 and stored in the storage unit 28. If it determines that the usage right has not been obtained, the process proceeds to step S43.

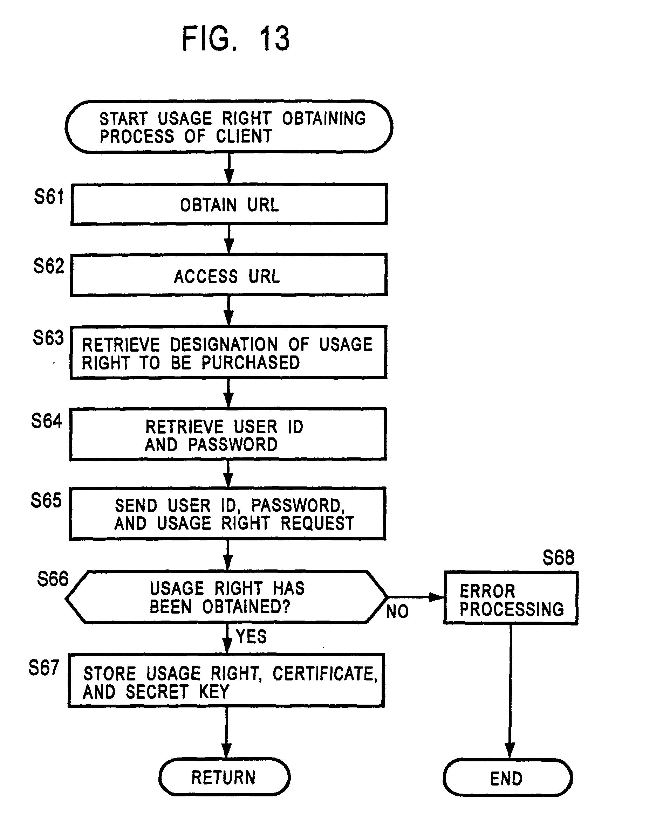

In step S43, the content using module 52 requests the DRM module 51 to obtain a usage right, and the DRM module 51 executes a usage right obtaining process according to the request. The details of the usage right obtaining process executed by the DRM module 51 are shown in the flowchart of Fig. 13.

First, in step S61, the DRM module 51 obtains the URL described in the content header. As described above, the URL is an address to be accessed in order to obtain a usage right necessary to use the content.

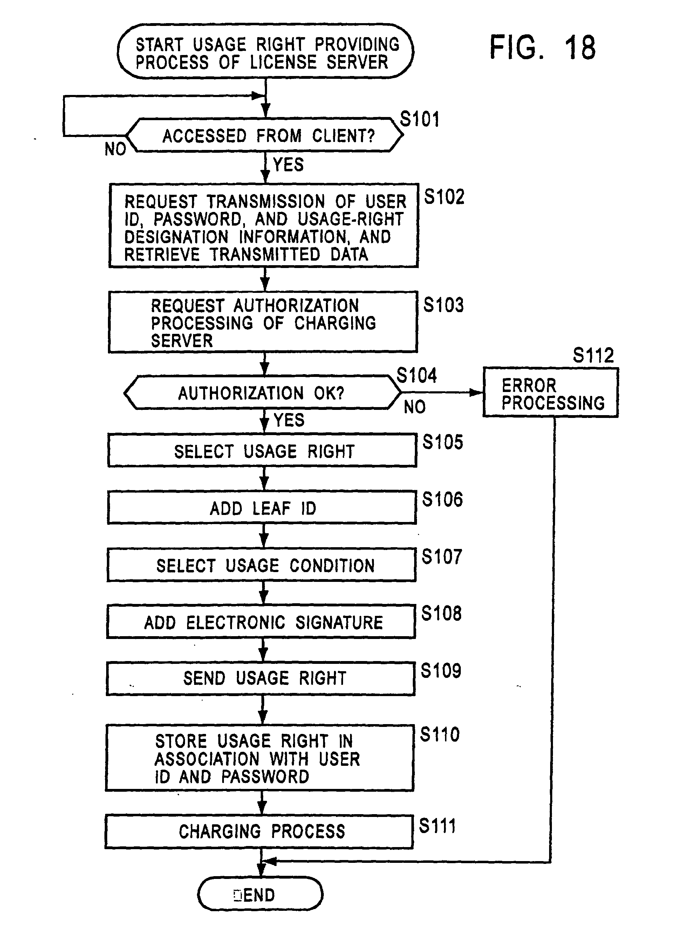

In step S62, the DRM module 51 accesses the URL obtained in step S61. More specifically, the client 1 accesses the license server 4 via the communication unit 29 over the Internet 2. The license server 4 sends a list of usage rights to the client 1, and makes a request to input usage-right designation information (this information may be a usage-right ID) for designating a usage right to be purchased (a usage right necessary to use the content), a user ID, and a password (in step S102 shown in Fig. 18 described below). The DRM module 51 displays this request on the display unit of the output unit 27. Based on this display, the user operates the input unit 26 to input the usage-right designation information, the user ID, and the password. The user ID and the password have been obtained beforehand by the user of the client 1 accessing the license server 4 over the Internet 2.

In steps S63 and S64, the DRM module 51 retrieves the usage-right designation information, user ID, and password input by the input unit 26. In step S65, the DRM module 51 controls the communication unit 29 to send the input user ID and password and a usage right request which includes the usage-right designation information and the leaf ID contained in the service data to the license server 4 over the Internet 2.

As described below with reference to Fig. 18, the license server 4 sends a usage right based on the user ID, password, and usage-right designation information (step S109), or, otherwise, does not send a usage right if the conditions are not satisfied (step S112).

In step S66, the DRM module 51 determines whether or not the usage right sent from the license server 4 has been received. If it is determined that the usage right has been received, then in step S67, the usage right is supplied to and stored in the storage unit 28.

Fig. 14 illustrates a usage right provided for the client 1.

"Version" is information in which the version of the usage right is described by separating a major version and a minor version using a dot. "Profile" is information described by a decimal integer value for specifying a limitation on the description method of the usage right.

"Usage-right ID" is identification information described by a hexadecimal constant value for identifying the usage right. "Creation date" indicates the date on which the usage right was created. "Effective period" indicates an effective period of the usage right. The effective period of "9999 23:59:59" indicates an unlimited effective period.

"Usage conditions" include an expiration date until which the content can be used based on the usage right, a playback limit within which the content can be played back based on the usage right, the maximum number of playbacks of the content, the number of times the content can be copied (the number of copies allowed) based on the usage right, the maximum number of checkouts, information indicating whether or not the content can be recorded onto a CD-R based on the usage right, the number of times the content can be copied to a PD (Portable Device), information indicating whether or not the usage right can be transferred, information indicating whether or not a use log must be maintained, and so forth.

"Electronic signatures of usage conditions" represent electronic signatures corresponding to the usage conditions.

"Constant value" is a constant value which is referred to in the usage conditions or the status of usage. "Leaf ID" is identification information for identifying a client. "Electronic signature" is an electronic signature of the entire usage right. "Certificate" is a certificate including a public key of the license server 4.

When the usage right is stored in step S67, processes are passed on to the content using module 52 from the DRM module 51.

If it is determined in step S66 that the usage right has not been received, then in step S68, the DRM module 51 performs error processing. More specifically, the DRM module 51 prohibits use of the content because the usage right to use the content is not obtained.

Therefore, each client 1 cannot use the content until a usage right necessary to use the content data is obtained.

The usage right obtaining process may be carried out before each user acquires the content.

Referring back to Fig. 12, if it is determined in step S42 that the usage right has been obtained, or when the usage right is obtained as a result of the usage right obtaining process in step S43 (when the usage right is stored in step S67 shown in Fig. 13), the content using module 52 determines in step S44 whether or not the obtained usage right is within the effective period.

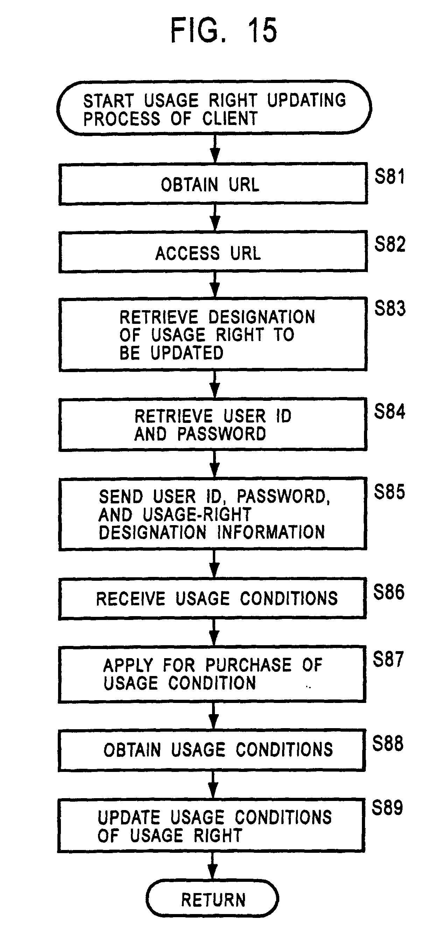

The determination whether or not the usage right is within the effective period is performed by comparing between the effective period (Fig. 14) defined in the usage right and the current time measured by the timer 20. If it is determined that the usage right is expired, in step S45, the content using module 52 requests the DRM module 51 to update the usage right, and the DRM module 51 executes a usage right updating process according to the request. The details of the usage right updating process executed by the DRM module 51 are shown in the flowchart of Fig. 15.

The operations performed in steps S81 through S85 are basically similar to the operations performed in steps S61 through S65 shown in Fig. 13, and a detailed description thereof is thus omitted; however, in step S83, the DRM module 51 retrieves usage-right designation information of a usage right to be updated, rather than a usage right to be purchased. In step S85, the DRM module 51 sends the user ID, the password, and the usage-right designation information of the usage right to be updated to the license server 4.

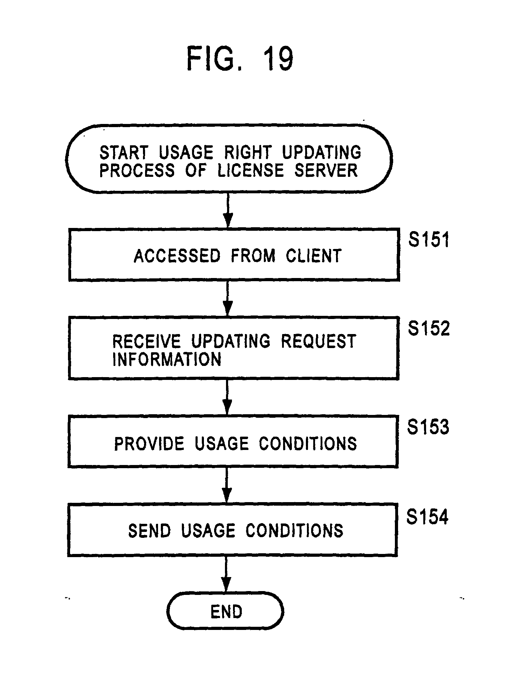

In response to the sending operation in step S85, as described below, the license server 4 provides usage conditions (in step S153 shown in Fig. 19). In step S86, the DRM module 51 of the client 1 receives the usage conditions provided by the license server 4, and outputs them to the output unit 27 for display. The user operates the input unit 26 to select a certain usage condition from or add a new usage condition to the usage conditions. In step S87, the DRM module 51 sends an application for purchase of the selected usage condition (the condition for updating the usage right) to the license server 4. According to this application, as described below, the license server 4 sends final usage conditions (in step S154 shown in Fig. 19). In step S88, the DRM module 51 of the client 1 obtains the usage conditions from the license server 4, and, in step S89, updates the usage conditions of the corresponding usage right stored in the storage unit 28 to the usage conditions.

Then, processes are passed on to the content using module 52 from the DRM module 51.

Referring back to Fig. 12, if it is determined in step S44 that the usage right is within the effective period, or when the usage right is updated in step S45 (when the usage conditions are updated in step S89 shown in Fig. 15), then in step S46, the DRM module 51 executes a predetermined using process.

In a case where the content using module 52 is the playback module 52-1, a process of playing back the content is carried out; in case of the write module 52-2, a process of writing the content onto a CD-R is carried out; in case of the read module 52-3, a process of reading the content from a CD is carried out; or in case of the LCM module 52-4, a process of checking in, checking out, or moving the content with respect to a portable device is carried out.

Prior to the using process, the DRM module 51 reads the usage conditions and the usage status contained in the usage right, and performs a predetermined using process when the usage conditions are satisfied. For example, the content can be played back only when the number of times the content was played back stored in the usage status is smaller than the maximum number of playbacks of the content contained in the usage conditions.

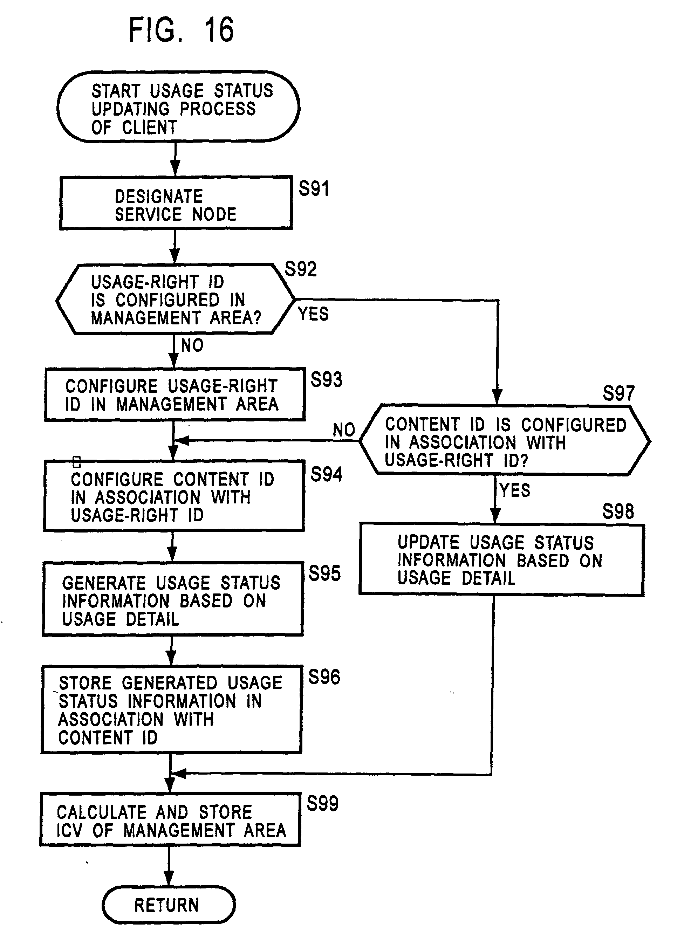

In step S47, the content using module 52 requests the DRM module 51 to update the usage status information, and the DRM module 51 executes a usage status updating process according to the request. The details of the usage status updating process executed by the DRM module 51 are shown in the flowchart of Fig. 16.

In step S91, the DRM module 51 reads the leaf ID contained in the usage right (Fig. 14) of the used content to designate a service node based on the leaf ID. More specifically, a service node ID is detected in the way similar to step S2 shown in Fig. 7.

In step S92, the DRM module 51 determines whether or not the same ID as the usage-right ID stored in the header (Fig. 11) of the used content is configured in a management area for the service node detected in step S91 which is reserved in step S3 shown in Fig. 7. If it is determined that it is not configured, the process proceeds to step S93. For example, when the content is used first time, the usage-right ID of the content is not configured in the management area, and the process proceeds to step S93.

The DRM module 51 configures the usage-right ID of the used content in the management area of the storage unit 28 in step S93, and configures a content ID (CID) in association with the usage-right ID in step S94.

In step S95, the DRM module 51 generates usage status information based on the using process performed in step S46 shown in Fig. 12. In step S96, the DRM module 51 stores the generated information in association with the content ID configured in step S93.

For example, for use in playback of the content, when the content is played back one time in step S46 shown in Fig. 12, usage status information indicating one-time playback is generated and is stored in association with the content ID.

If it is determined in step S92 that the usage-right ID is configured, then in step S97, the DRM module 51 determines whether or not the content ID (CID) of the used content has been configured in association with the usage-right ID.

If it is determined in step S97 that the content ID (CID) has not been configured, the process proceeds to step S94, in which, as described above, the content ID is configured in association with the usage-right ID. Then, usage status information is generated in step S95, and the usage status information is stored in association with the content ID in step S96.

If it is determined in step S97 that the content ID has been configured in association with the usage-right ID, then in step S98, the DRM module 51 updates the usage status information stored in association with the content ID based on the using process performed in step S46 shown in Fig. 12. That is, for example, the number of playbacks increments by one.

When the generated usage status information is stored in association with the content ID (CID) in step S96, or when the usage status information is updated in step S98, then in step S99, the DRM module 51 calculates an ICV of the management area in which the usage status information is newly stored or is updated, and stores it in correspondence with the management area.

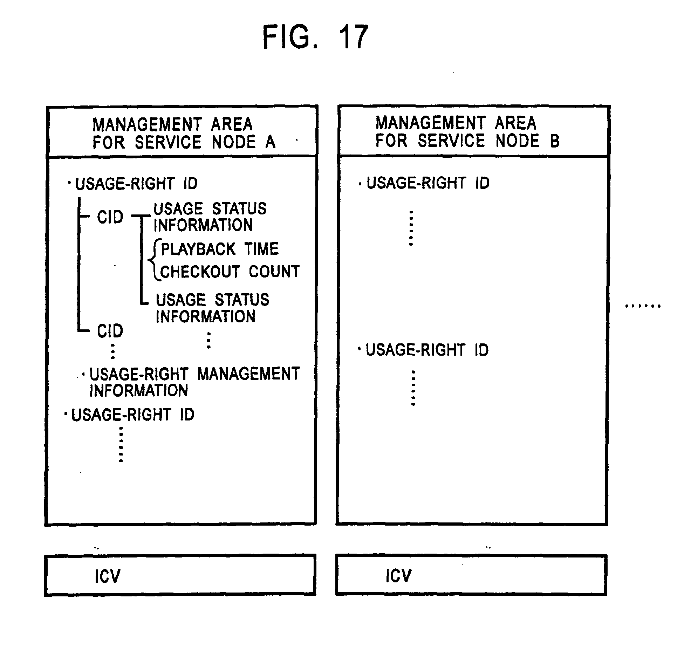

Fig. 17 shows the status of the usage status information stored in the storage unit 28. In the manner shown, the usage status information is stored in the management area for the service node in association with the content ID (CID) and the usage-right ID for management. In association with each usage-right ID, usage-right management information including information indicating the registration date of the usage right corresponding to the usage-right ID, the number of content items corresponding to the usage right which can be used on the client 1, and so on are also managed.

Although not shown in the description of step S46 shown in Fig. 12, prior to the specific content using process of step S46, an ICV of the entire management area in which the content ID of the content to be used is stored is calculated, and it is determined whether or not this ICV matches the ICV calculated and stored in step S99 shown in Fig. 16. If these ICVs match, the content using process based on the usage status information stored in association with the content ID is carried out.

Accordingly, since usage status information is managed on a service-by-service basis, even if a piece of usage status information is broken or tampered with, the effects thereof can be blocked within one management area. In other words, the content whose usage status information is stored in a management area in which usage status information which is tampered with or the like is stored cannot be used; however, the content whose usage status information is stored in other management areas can be used without difficulty.

A usage right providing process of the license server 4 corresponding to the usage right obtaining process (in step S43 shown in Fig. 12) of the client 1 shown in Fig. 13, and a usage right updating process of the license server 4 corresponding to the usage right updating process (in step S45 shown in Fig. 12) of the client 1 shown in Fig. 15 are described with reference to Figs. 18 and 19, respectively.

First, the usage right providing process is described.

In step S101, the CPU 21 of the license server 4 stands by until it is accessed from the client 1. When the license server 4 is accessed, in step S102, the CPU 21 sends a list of usage rights including information on usage rights to the accessing client 1, and requests transmission of a user ID, a password, and usage-right designation information. As described above, when the user ID, the password, the leaf ID, and the usage-right designation information (this information may be a usage-right ID) are sent from the client 1 in step S65 shown in Fig. 13, the CPU 21 of the license server 4 receives and captures them via the communication unit 29.

In step S103, the CPU 21 of the license server 4 accesses the charging server 5 via the communication unit 29 to request authorization of the user corresponding to the user ID and the password. Upon the authorization request from the license server 4 over the Internet 2, the charging server 5 checks past payment records or the like of the user corresponding to the user ID and password to determine whether or not the user has a record of nonpayment for any usage right. If the user does not have such a record, the charging server 5 sends an authorization result indicating that the user is authorized to have the usage right. If the user has a nonpayment record or the like, the charging server 5 sends an authorization result indicating that the user is not authorized to have the usage right.

In step S104, the CPU 21 of the license server 4 determines whether or not the authorization result from the charging server 5 indicates that the user is authorized to have the usage right. If the user is authorized to have the usage right, then in step S105, the usage right corresponding to the usage-right designation information retrieved in step S102 is extracted from the usage rights stored in the storage unit 28. Each of the usage rights stored in the storage unit 28 includes information indicating a usage-right ID, a version, a creation date, an effective period, and so on. In step S106, the CPU 21 adds the received leaf ID to the usage right. In step S107, the CPU 21 selects the usage conditions associated with the usage right selected in step S105. If the user specifies a usage condition in step S102, the usage condition is added to the usage conditions prepared in advance, if necessary. The CPU 21 adds the selected usage conditions to the usage right. The usage conditions may be added to the usage right in advance.

In step S108, the CPU 21 signs the usage right using the secret key of the license server 4, and attaches the certificate including the public key of the license server 4 to the usage right, thereby generating a usage right having the structure shown in Fig. 14.

In step S109, the CPU 21 of the license server 4 sends the resulting usage right (having the structure shown in Fig. 14) to the client 1 via the communication unit 29 over the Internet 2.

In step S110, the CPU 21 of the license server 4 stores the usage right (including the usage conditions and the leaf ID) sent in step S109 in the storage unit 28 in association with the user ID and password retrieved in step S102. In step S111, the CPU 21 executes a charging process. More specifically, the CPU 21 requests the charging server 5 via the communication unit 29 to charge the user corresponding to the user ID and password. The charging server 5 charges the user according to this charging request. As described above, if the user does not make payment for this charging operation, the user is not able to receive a usage right thereafter even if he/she requests allocation of a usage right.

In this case, an authorization result indicating that the user is not authorized to have the usage right is sent from the charging server 5, and the process proceeds from step S104 to step S112, in which the CPU 21 performs error processing. More specifically, the CPU 21 of the license server 4 controls the communication unit 29 to send a message indicating that the accessing client 1 is not allowed to have the usage right, and the process ends.

As described above, since the client 1 is not able to receive a usage right, it is not able to use the content (to decode the encrypted content data for playback).

Next, the usage right updating process executed by the license server 4 is described (Fig. 19).

First, in step S151, the CPU 21 of the license server 4 is accessed from the client 1. Then in step S152, the CPU 21 receives the usage-right designation information sent by the client 1 in step S85 and usage-right updating request information.

In step S153, upon receipt of an updating request of a usage right, the CPU 21 reads the usage conditions (the usage conditions to be updated) corresponding to the usage right from the storage unit 28, and sends the read usage conditions to the client 1.

In the foregoing description, the usage status information is managed on a service-by-service basis, by way of example; however, the client 1 may manage the obtained usage right (in step S67 shown in Fig. 13) on a service-by-service basis. Thus, even if one usage right is broken or tampered with, the effects thereof can be blocked within one management area.

As described above, when, in response to the presented usage conditions, purchase of a usage condition is applied for by the client 1 in step S87 shown in Fig. 15, the CPU 21 of the license server 4 generates data corresponding to this usage condition in step S154, and sends it to the client and 1 in step S154. As described above, the client 1 uses the usage conditions received in step S89 to update the registered usage conditions of the usage right.

The clients according to the present invention may include personal computers, PDAs (Personal Digital Assistants), cellular phones, game terminal devices, and so forth.

When a series of operations are executed by software, a program constituting the software is installed to a computer incorporated in dedicated hardware'or, for example, a general-purpose personal computer capable of executing various functions by installing various programs, or the like over a network or via a recording medium.

This recording medium is formed of, as shown in Fig. 5, not only packaged media distributed separately from the main body of the apparatus to provide a program, such as the magnetic disk 41 (including'a floppy disk) having a program recorded therein, the optical disk 42 (including a CD-ROM (Compact Disk - Read Only Memory) and a DVD (Digital Versatile Disk)), the magneto-optical disk 43 (including MD (Mini-Disk)), or the semiconductor memory 44, but also the ROM 22 having a program recorded therein or a hard disk included in the storage unit 28, which is offered to users in the state where it is incorporated in the main body of the apparatus in advance.

It is to be understood herein that the steps describing the program recorded in the recording medium include the operation carried out in a time-series manner according to the sequence described, and the operation which is carried out in a parallel or independent manner but which is not necessarily carried out in a time-series manner.

As used herein, the term "system" indicates the overall apparatus formed of a plurality of apparatuses.

Industrial Applicability

According to the present invention, usage information of content is managed on a service-by-service basis in association with each service, and the content is used based on the usage information. Thus, if usage information is broken, the effects thereof can be blocked within an area where the information is managed.

**Claims**

1. An information processing apparatus which uses content based on at least one service provided by at least one server, said information processing apparatus comprising:

   managing means for managing usage information of the content on a service-by-service basis in association with each service; and
   executing means for executing a process of using the content based on the usage information.

2. An information processing apparatus according to claim 1, wherein the managing means calculates an ICV of the usage information associated with the service for storage on a service-by-service basis, and

   the using means calculates an ICV of the usage information managed in association with the service associated with the usage information of the content to be used, and executes the process of using the content when the obtained ICV is identical to the ICV calculated and stored by the managing means.

3. An information processing apparatus according to claim 1, wherein the usage information comprises usage status information indicating usage status of the content or a usage right necessary to use the content.

4. An information processing method for an information processing apparatus which uses content based on at least one service provided from at least one server, said information processing method comprising:

   a managing step of managing usage information of the content on a service-by-service basis in association with each service; and
   an executing step of executing a process to use the content based on the usage information.

5. A recording medium having a computer-readable program for an information processing apparatus recorded therein, the information processing apparatus using content based on at least one service provided from at least one server, the program including:

   a management control step of controlling management of usage information of the content on a service-by-service basis in association with each service; and
   an execution control step of controlling execution of a process of using the content based on the usage information.

6. A program for an information processing apparatus which uses content based on at least one service provided from at least one server, said program causing a computer to execute:

   a management control step of controlling management of usage information of the content on a service-by-service basis in association with each service; and
   an execution control step of controlling execution of a process of using the content based on the usage information.

# FIG. 1

EP 1 496 439 A1

# FIG. 2

EP 1 496 439 A1

# FIG. 3

## FIG. 4

KR (ROOT KEY) — 2301

2302 NODE KEYS →

MEMORY STICK (TRADEMARK)

M LAYERS

T-system

2305

2304 CATEGORY $(2^M)$

SUB-CATEGORY

PLAYBACK-ONLY DEVICE — 2306

MUSIC PLAYBACK FUNCTION-EQUIPPED PHONE — 2307

2308 — PHS

CELLULAR PHONE — 2309

N LAYERS

2303 LEAF KEYS →

FIG. 5

TIMER 20

CPU 21

ROM 22

RAM 23

ENCRYPTION/DECRYPTION UNIT 24

CODEC 25

31

32

INPUT/OUTPUT INTERFACE

INPUT UNIT 26

OUTPUT UNIT 27

STORAGE UNIT 28

COMMUNICATION UNIT 29

DRIVE 30

41  42 43  44

1

# FIG. 6

EP 1 496 439 A1

# FIG. 7

START SERVICE REGISTRATION PROCESS OF CLIENT

RECEIVE SERVICE DATA — S1

DESIGNATE SERVICE NODE — S2

RESERVE MANAGEMENT AREA — S3

END

# FIG. 8

| MANAGEMENT AREA<br>FOR SERVICE NODE A | MANAGEMENT AREA<br>FOR SERVICE NODE B | ...... |
|---|---|---|
| | | |

# FIG. 9

```
        ┌──────────────────────────┐
        │   START DOWNLOADING      │
        │   PROCESS OF CLIENT      │
        └──────────────────────────┘
                     │
                     ▼
        ┌──────────────────────────┐  S11
        │  ACCESS CONTENT SERVER   │
        └──────────────────────────┘
                     │
                     ▼
        ┌──────────────────────────┐  S12
        │   NOTIFY CONTENT ID      │
        └──────────────────────────┘
                     │
                     ▼
        ┌──────────────────────────┐  S13
        │    RECEIVE CONTENT       │
        └──────────────────────────┘
                     │
                     ▼
        ┌──────────────────────────┐  S14
        │     STORE CONTENT        │
        └──────────────────────────┘
                     │
                     ▼
              ┌────────────┐
              │    END     │
              └────────────┘
```

# FIG. 10

```
      START PROCESS OF
      CONTENT SERVER
            │
  ┌─────────┘
  │         ▼
  │   ◁ ACCESSED FROM CLIENT? ▷        S21
  │  NO            │
  └───────────────┘
              │ YES
              ▼
      RETRIEVE INFORMATION           S22
      FOR DESIGNATING CONTENT
              │
              ▼
      READ DESIGNATED CONTENT        S23
              │
              ▼
      ENCRYPT CONTENT                S24
              │
              ▼
  ADD KEY INFORMATION NECESSARY      S25
  TO DECODE TO HEADER
              │
              ▼
  ADD HEADER TO ENCRYPTED            S26
  CONTENT AND OUTPUT
  THE CONTENT
              │
              ▼
            END
```

# FIG. 11

EP 1 496 439 A1

| Header | Data |
|---|---|

| Encryption Block1 | Encryption Block2 | Encryption Block3 | ... |
|---|---|---|---|

| Content info. | URL | Lic. ID | EKB | $K_{EKBC}(Kc)$ | Attributes | Signatures |
|---|---|---|---|---|---|---|

| IV | Seed | $E_{K'c}(data)$ |
|---|---|---|

CBC mode
K'c=Hash(Kc, Seed)

| CID | Codec, etc... |
|---|---|

# FIG. 12

```
        ┌──────────────────────────┐
        │   START CONTENT USING    │
        │    PROCESS OF CLIENT     │
        └──────────────────────────┘
                     │
                     ▼
S41  ┌────────────────────────────────┐
     │   READ ATTRIBUTE OF CONTENT    │
     └────────────────────────────────┘
                     │
                     ▼                                              S43
S42  ╱─────────────────────────╲   NO    ┌─────────────────────────┐
     ╲    USAGE RIGHT HAS       ╱ ──────▶ │     USAGE RIGHT         │
     ╱    BEEN OBTAINED?        ╲         │   OBTAINING PROCESS     │
     ╲─────────────────────────╱         └─────────────────────────┘
              │ YES                                    │
              ◀───────────────────────────────────────┘
              │
              ▼                                                     S45
S44  ╱─────────────────────────╲   NO    ┌─────────────────────────┐
     ╲   USAGE RIGHT IS WITHIN  ╱ ──────▶ │     USAGE RIGHT         │
     ╱    EFFECTIVE PERIOD?     ╲         │   UPDATING PROCESS      │
     ╲─────────────────────────╱         └─────────────────────────┘
              │ YES                                    │
              ◀───────────────────────────────────────┘
              │
              ▼
S46  ┌────────────────────────────────┐
     │         USING PROCESS          │
     └────────────────────────────────┘
                     │
                     ▼
S47  ┌────────────────────────────────┐
     │   USAGE STATUS UPDATING        │
     │         PROCESS                │
     └────────────────────────────────┘
                     │
                     ▼
              ┌──────────────┐
              │     END      │
              └──────────────┘
```

# FIG. 13

```
        ┌─────────────────────────────┐
        │  START USAGE RIGHT OBTAINING │
        │  PROCESS OF CLIENT           │
        └─────────────────────────────┘
                      │
                      ▼
S61     ┌─────────────────────────────┐
        │        OBTAIN URL            │
        └─────────────────────────────┘
                      │
                      ▼
S62     ┌─────────────────────────────┐
        │        ACCESS URL            │
        └─────────────────────────────┘
                      │
                      ▼
S63     ┌─────────────────────────────┐
        │  RETRIEVE DESIGNATION OF USAGE│
        │  RIGHT TO BE PURCHASED       │
        └─────────────────────────────┘
                      │
                      ▼
S64     ┌─────────────────────────────┐
        │      RETRIEVE USER ID        │
        │      AND PASSWORD            │
        └─────────────────────────────┘
                      │
                      ▼
S65     ┌─────────────────────────────┐
        │   SEND USER ID, PASSWORD,    │
        │   AND USAGE RIGHT REQUEST    │
        └─────────────────────────────┘
                      │
                      ▼                                    S68
S66   ╱─────────────────────────────╲      ┌──────────────┐
      ╱  USAGE RIGHT HAS              ╲ NO  │  ERROR       │
      ╲  BEEN OBTAINED?               ╱────▶│  PROCESSING  │
       ╲─────────────────────────────╱      └──────────────┘
                      │ YES                         │
                      ▼                             │
S67     ┌─────────────────────────────┐            │
        │  STORE USAGE RIGHT, CERTIFICATE,│        │
        │  AND SECRET KEY              │            │
        └─────────────────────────────┘            │
                      │                             ▼
                      ▼                      ┌──────────────┐
               ┌──────────────┐              │     END      │
               │    RETURN     │             └──────────────┘
               └──────────────┘
```

# FIG. 14

| |
|---|
| VERSION |
| PROFILE |
| USAGE-RIGHT ID |
| CREATION DATE |
| EFFECTIVE PERIOD |
| USAGE CONDITIONS |
| ELECTRONIC SIGNATURES OF USAGE CONDITIONS |
| CONTENT CONDITIONS |
| CONSTANT VALUE |
| LEAF ID |
| ELECTRONIC SIGNATURE |
| CERTIFICATE |

# FIG. 15

START USAGE RIGHT UPDATING
PROCESS OF CLIENT

OBTAIN URL — S81

ACCESS URL — S82

RETRIEVE DESIGNATION
OF USAGE RIGHT TO
BE UPDATED — S83

RETRIEVE USER ID
AND PASSWORD — S84

SEND USER ID, PASSWORD,
AND USAGE-RIGHT
DESIGNATION INFORMATION — S85

RECEIVE USAGE CONDITIONS — S86

APPLY FOR PURCHASE OF
USAGE CONDITION — S87

OBTAIN USAGE CONDITIONS — S88

UPDATE USAGE CONDITIONS
OF USAGE RIGHT — S89

RETURN

# FIG. 16

```
        ┌─────────────────────┐
        │  START USAGE STATUS │
        │  UPDATING PROCESS   │
        │  OF CLIENT          │
        └─────────────────────┘
                  │
                  ▼
        ┌─────────────────────┐
        │  DESIGNATE          │  S91
        │  SERVICE NODE       │
        └─────────────────────┘
                  │
                  ▼
        ╱─────────────────────╲  S92
       ╱  USAGE-RIGHT ID       ╲
      ╱   IS CONFIGURED IN      ╲──────────────────┐
      ╲   MANAGEMENT AREA?      ╱  YES             │
       ╲─────────────────────╱                     │
                  │ NO                              │
                  ▼                                 ▼
        ┌─────────────────────┐  S93     ╱──────────────────────╲  S97
        │  CONFIGURE USAGE-   │         ╱  CONTENT ID IS         ╲
        │  RIGHT ID IN        │    NO  ╱   CONFIGURED IN          ╲
        │  MANAGEMENT AREA    │◄──────╲   ASSOCIATION WITH        ╱
        └─────────────────────┘        ╲  USAGE-RIGHT ID?        ╱
                  │                      ╲──────────────────────╱
                  ▼                                 │ YES
        ┌─────────────────────┐  S94                ▼
        │  CONFIGURE CONTENT  │         ┌──────────────────────┐  S98
        │  ID IN ASSOCIATION  │         │  UPDATE USAGE STATUS │
        │  WITH USAGE-RIGHT   │         │  INFORMATION BASED ON│
        │  ID                 │         │  USAGE DETAIL        │
        └─────────────────────┘         └──────────────────────┘
                  │                                 │
                  ▼                                 │
        ┌─────────────────────┐  S95                │
        │  GENERATE USAGE     │                     │
        │  STATUS INFORMATION │                     │
        │  BASED ON           │                     │
        │  USAGE DETAIL       │                     │
        └─────────────────────┘                     │
                  │                                 │
                  ▼                                 │
        ┌─────────────────────┐  S96                │
        │  STORE GENERATED    │                     │
        │  USAGE STATUS       │                     │
        │  INFORMATION IN     │                     │
        │  ASSOCIATION WITH   │                     │
        │  CONTENT ID         │                     │
        └─────────────────────┘                     │
                  │◄────────────────────────────────┘
                  ▼
        ┌─────────────────────┐  S99
        │  CALCULATE AND STORE│
        │  ICV OF MANAGEMENT  │
        │  AREA               │
        └─────────────────────┘
                  │
                  ▼
            ┌──────────┐
            │  RETURN  │
            └──────────┘
```

# FIG. 17

| MANAGEMENT AREA<br>FOR SERVICE NODE A | MANAGEMENT AREA<br>FOR SERVICE NODE B |

· USAGE-RIGHT ID

 ⌐ CID ⌐ USAGE STATUS
      INFORMATION

      ⎰ PLAYBACK TIME
      ⎱ CHECKOUT COUNT

      ⌐ USAGE STATUS
      ⌐ INFORMATION

 ⌐ CID

· USAGE-RIGHT MANAGEMENT
 INFORMATION

· USAGE-RIGHT ID

· USAGE-RIGHT ID

 ⋮

· USAGE-RIGHT ID

 ⋮

......

| ICV | ICV |

FIG. 18

START USAGE RIGHT PROVIDING
PROCESS OF LICENSE SERVER

ACCESSED FROM CLIENT? S101

NO

YES

REQUEST TRANSMISSION OF USER
ID, PASSWORD, AND USAGE-RIGHT
DESIGNATION INFORMATION, AND
RETRIEVE TRANSMITTED DATA    S102

REQUEST AUTHORIZATION
PROCESSING OF CHARGING
SERVER    S103

AUTHORIZATION OK?    S104

NO

S112
ERROR
PROCESSING

YES

SELECT USAGE RIGHT    S105

ADD LEAF ID    S106

SELECT USAGE CONDITION    S107

ADD ELECTRONIC SIGNATURE    S108

SEND USAGE RIGHT    S109

STORE USAGE RIGHT IN
ASSOCIATION WITH USER
ID AND PASSWORD    S110

CHARGING PROCESS    S111

END

# FIG. 19

```
┌─────────────────────────────┐
│  START USAGE RIGHT UPDATING  │
│  PROCESS OF LICENSE SERVER   │
└─────────────────────────────┘
              │
              ▼
┌─────────────────────────────┐  S151
│     ACCESSED FROM CLIENT     │
└─────────────────────────────┘
              │
              ▼
┌─────────────────────────────┐  S152
│   RECEIVE UPDATING REQUEST   │
│   INFORMATION                │
└─────────────────────────────┘
              │
              ▼
┌─────────────────────────────┐  S153
│   PROVIDE USAGE CONDITIONS   │
└─────────────────────────────┘
              │
              ▼
┌─────────────────────────────┐  S154
│    SEND USAGE CONDITIONS     │
└─────────────────────────────┘
              │
              ▼
          (  END  )
```

## INTERNATIONAL SEARCH REPORT

| International application No. |
| --- |
| PCT/JP03/04547 |

| A. CLASSIFICATION OF SUBJECT MATTER |
| --- |
| Int.Cl$^7$ G06F12/14, G06F17/60 |

According to International Patent Classification (IPC) or to both national classification and IPC

| B. FIELDS SEARCHED |
| --- |

Minimum documentation searched (classification system followed by classification symbols)
Int.Cl$^7$ G06F12/14, G06F17/60

Documentation searched other than minimum documentation to the extent that such documents are included in the fields searched

| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2001-236080 A (Sony Corp.), 31 August, 2001 (31.08.01), All pages; all drawings & EP 1152397 A1 | 1-6 |
| Y | JP 2000-260121 A (Toshiba Corp.), 22 September, 2000 (22.09.00), All pages; all drawings & EP 1035543 A2 | 1-6 |
| Y | Edited by Mamoru MAEKAWA, Mario TOKORO, Kentaro SHIMIZU, "Bunsan Operating System UNIX no Tsugini kuru mono", Kyoritsu Shuppan Co., Ltd., 25 December, 1991 (25.12.91), pages 175 to 182 | 1-6 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 June, 2003 (27.06.03) | 15 July, 2003 (15.07.03). |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/04547 |

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 10-49443 A (Nippon Telegraph And Telephone Corp.), 20 February, 1998 (20.02.98), All pages; all drawings (Family: none) | 1-6 |

Form PCT/ISA/210 (continuation of second sheet) (July 1998)